# EUROPEAN PATENT APPLICATION

(11) **EP 1 538 862 A1**
(43) Date of publication of application: **08.06.2005**
(21) Application number: 04257206.5
(22) Date of filing: 22.11.2004
(51) Int. Cl.: H04Q 7/38

(54) **Method and apparatus for determining the current location of a Bluetooth enabled device by synchronizing with a plurality of other devices**

(30) Priority: 04.12.2003 US 728178
(71) Applicant: LUCENT TECHNOLOGIES INC., Murray Hill, New Jersey 07974-0636 (US)
(72) Inventor: Alicherry, Mansoor A.K., Scotch Plains NJ 07076 (US); Nagesh, Harsha S., Berkeley Heights NJ 07922 (US); Phadke, Chitra A., Basking Ridge NJ 07920 (US); Poosala, Viswanath, New Jersey 07920 (US)
(74) Representative: Watts, Christopher Malcolm Kelway, Dr.

(57) **Abstract**

The location of a Bluetooth enabled device is determined by the device broadcasting a message (300), for instance a device discovery message, and if a minimum number of responses are received (310), the device synchronizes with at least 3 of the responding mobile devices (330), which can be Bluetooth slaves forming a piconet with the device as master. The location is calculated as a function of the respective locations of the synchronized devices (340).
In embodiments, a special (e.g. DIAC) access code is used so that only devices having knowledge of their current location reply, and the calculation is carried out by a function of clock skews being for instance clock offsets of the LMP protocol.

## Description

### Field of the Invention

The present invention relates generally to mobile devices and, more particularly, to a method and apparatus for determining the current location of an individual mobile device.

### Background of the Invention

The current adoption and use of a variety of mobile devices by users is widespread. For example, wireless cellular telecommunications systems are rapidly replacing the delivery of services once solely provided by conventional wire-based telecommunications systems. In particular, an increasing number of cellular telephone subscribers rely solely on their mobile cellular telephone as their primary voice (and data) connection and no longer subscribe to a traditional wire-line (i.e., a well-known POTS line) service. Wireless cellular communications is well-known and the art is replete with descriptions thereof, for example, U.S. Pat. No. 5,204,902, which is hereby incorporated for reference, so the details of such cellular communications will be dispensed with herein.

An important well-known attribute of wireless cellular communications networks (and their associated network infrastructure) is the ability to locate particular mobile telephones communicating throughout the network. Conventionally, the location of a particular mobile telephone within the cellular communications network is accomplished by varying forms of triangulation and/or trilateration. Triangulation is the well-known technique of locating a particular mobile device through the knowledge of the angle of arrival of signals at the to-be-located mobile device from three other devices, where the locations of the three other devices is known. Trilateration is the well-known technique of locating a particular mobile device by determining the distance of the to-be-located mobile device from at least three reference points whose precise location is known. For example, the three reference points might be three other mobile devices in proximity to the to-be-located mobile device. In terms of locating a cellular telephone, two primary forms of trilateration are used in conventional cellular communications. The first form of trilateration is performed by the cellular network itself using its network infrastructure; in particular, the network uses the known locations of each base station within its infrastructure to locate a particular mobile telephone. Specifically, the location of three known base stations in the same geographic location as the to-be-located mobile telephone is used to determine the relative position of such device. The typical locating precision of this technique is approximately in the range of 50 meters to 300 meters (e.g., as detailed in the publicly available emergency 911 Phase II FCC Specification).

The second trilateration form conventionally used in locating a particular mobile telephone device within the cellular communications network employs the well-known Global Positioning System (GPS). GPS is a time-synchronized, space-based satellite system that broadcasts spread spectrum codes amongst a standard GPS constellation consisting of 24 individual satellites. A ground-based GPS receiver at or near the object to be located (e.g., the cellular telephone device) determines the difference between the time at which each satellite transmits a particular time signal and the time at which such signal is received. Using the calculated time differentials and standard GPS, the object's location is determined typically to within about 100 meters. This accuracy can be further improved upon by using the well-known commercially available Differential GPS, which improves the GPS location accuracy to within 10 meters.

While the typical techniques described above are useful in locating objects (e.g., wireless mobile telephone) within a wireless communications network such techniques are subject to certain constraints. For example, if the to-be-located cellular telephone does not have good visibility (for example, poor line-of-sight due to its location in a dense urban canyon area) to the required number of base stations, the location of such mobile telephone cannot be determined with precision. Similarly, due to low power levels from the GPS satellites, GPS location requires that the GPS receiver have a clear, line-of-sight path to at least three satellites above a certain horizon level to avoid adverse effects caused by inclement weather, terrain and tall buildings in determining the GPS receiver's current location. In certain applications, such as emergency 911, the inability to locate a particular mobile device is unacceptable.

Thus, there exists a need for an enhanced technique for precisely locating the current position of mobile devices (for example, a wireless mobile telephone).

### Summary of the Invention

The present invention provides a method and apparatus for determining the current location of a mobile device. More particularly, the various aspects of the present invention are based on the realization that current Bluetooth® enabled mobile devices (for example, Bluetooth enabled mobile telephones) can be located precisely in an independent fashion (i.e., independent from any communications network associated with the particular mobile device or independent from a GPS or other dedicated system used for location identification purposes).

In accordance with an aspect of the invention, a certain plurality of Bluetooth enabled devices, for example, a plurality of Bluetooth enabled mobile telephones, have knowledge of their individual geographic locations. Illustratively, such a plurality of Bluetooth enabled mobile telephones might be mixed with a larger community of non-Bluetooth enabled mobile telephones within a certain wireless communications network. Further, in accordance with an aspect of the invention, when a particular Bluetooth enabled mobile telephone (i.e., a mobile telephone not included in the plurality of devices having current knowledge of their individual location) desires to obtain its current location such mobile telephone broadcasts a message (illustratively, a device discovery message). In accordance with the preferred embodiment of the invention, such message is broadcast within a certain fixed area within the particular communications network topology. Thereafter, only those individual Bluetooth enabled mobile telephones of the plurality which have current knowledge of their location respond to such message broadcast. In accordance with an aspect of the invention, when three or more responses have been received to the broadcasted message, the to-be-located mobile telephone and responding mobile telephones are synchronized and the exact position of the to-be-located mobile telephone is determined, illustratively, as function of clock skews between the synchronized mobile telephones.

Importantly, in accordance with the above-described aspects of the invention, a particular mobile device is located independent from any associated communications network infrastructure and/or any other dedicated hardware or systems which might be used for location identification purposes (e.g., a GPS). Thus, in accordance with a further embodiment of the invention, a wireless communications network can have the flexibility of locating particular devices using either conventional location techniques or such network could issue a command to a particular device to obtain its own location using the above-described aspects of the invention. Advantageously, this would have the potential benefit of power conservation amongst cellular telephones in such communications network as the GPS receivers associated with such telephones may be turned off.

Bluetooth wireless technology, and Bluetooth enabled devices, are not new. See, for example, "the Specification of the Bluetooth System", Volume 0, dated November 5, 2003, as amended (inclusive of Core Package, Version 1.2), available at the Internet site http://www.bluetooth.com, and hereby incorporated by reference in its entirety (hereinafter referred to as the "Bluetooth Core Specification"). It has, however, remained for the Applicants herein to recognize that known device locatability techniques can be enhanced by using Bluetooth enabled devices in determining the precise location of such mobile devices whereby the precise location can be determined in an independent fashion and as a function of the Bluetooth enabled devices themselves.

### Brief Description of the Drawings

FIG. 1 shows an illustrative mobile telephone configured in accordance with the principles of the invention;
FIG.'s 2 and 2A show an illustrative cellular communications network arrangement suitable for implementing embodiments of the present invention incorporating the mobile telephone of FIG. 1; and
FIG. 3 shows a flowchart of illustrative operations for locating a mobile device, for example the mobile telephone of FIG. 1, in accordance with the principles of the present invention.

### Detailed Description

The present invention provides a method and apparatus for determining the current location of a mobile device. More particularly, the various aspects of the present invention are based on the realization that current Bluetooth enabled mobile devices (for example, Bluetooth enabled mobile telephones) can be located precisely in an independent fashion.

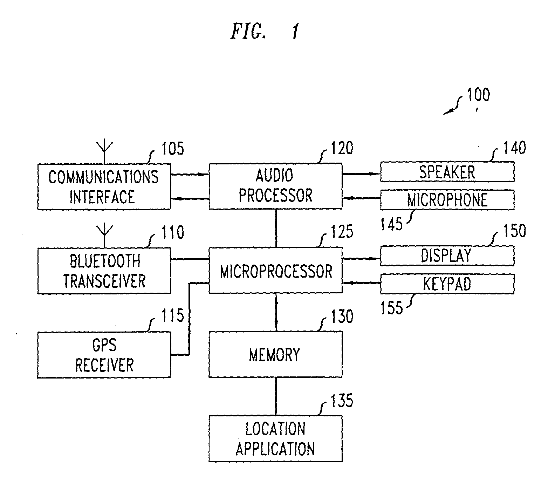

Referring to FIG. 1, an exemplary block diagram of a mobile telephone 100 configured in accordance with the principles of the invention is shown. While FIG. 1 is directed to a mobile telephone device, as will be appreciated, it is contemplated that the principles of the present invention will be applicable to locating any Bluetooth enabled device such as a personal digital assistant (PDA) or combination PDA/cellular telephone apparatus, to name just a few. In the embodiment of the invention shown in FIG. 1, mobile telephone 100 includes microprocessor 125 and memory 130 for controlling the various operational aspects of mobile telephone 100 in a conventional manner. Display 150 and keypad 155 work in a conventional manner to provide an interface with the user of mobile telephone 100. Location application 135 is an application program directed to the various aspects of the invention for determining the current location of mobile telephone 100 as described in greater detail hereinbelow. As will be appreciated, while the embodiment of the invention shown in FIG. 1 shows location application 135 as a standalone application executable by microprocessor 125, it will be understood that in accordance with further embodiments of the invention location application 135 may be fully integrated with microprocessor 125 (e.g., firmware) or integrated with Bluetooth transceiver 110, to name just a few alternatives.

Communications interface 105 enables wireless communication between mobile telephone 100 and a base station in a wireless communications network. Illustratively, communications interface 105 could be configured as a well-known transceiver device for communications with any wireless communications network using, for example, any of the well-known wireless communications standards such as Time Division Multiple Access (TDMA), Code Division Multiple Access (CDMA), Global System for Mobile (GSM) or Universal Mobile Telecommunications System (UMTS). Audio processor 120 controls the audio processing of signals received through communications interface 105 and routes such processed signals to speaker 140 in a conventional manner. Similarly, audio processor 120 also receives signals from microphone 145 and transfers such received signals to communications interface 105 (e.g., a CDMA transceiver) for broadcast transmission to a base station (e.g., a CDMA base station) in the wireless communications network. GPS receiver 115 allows for conventional operations between a GPS and mobile telephone 100.

As a Bluetooth enabled device, mobile telephone 100 includes Bluetooth transceiver 110 which provides for conventional Bluetooth communications and capabilities (as set forth in the Bluetooth Core Specification). As mentioned previously, the Bluetooth system provides a short-range, low power radio communication link for the transfer of voice and data. Bluetooth operates as a universal radio interface in the unlicensed ISM frequency band of 2.4GHz thereby enabling portable electronic devices to connect and communicate via ad hoc networks. In view of Bluetooth's key features which include robustness, low complexity, low power and low cost there is currently significant interest in supporting the widespread adoption of Bluetooth by a variety of groups, including cellular telephone manufacturers, mobile PC manufacturers, electronics manufacturers, handheld device developers, software developers and integrated circuit vendors.

It is such widespread adoption, and the introduction of Bluetooth enabled devices throughout today's communications networks, that has led the Applicants herein to recognize that known device locatability techniques can be enhanced by using Bluetooth enabled devices in determining the current location of such mobile devices whereby the precise location can be determined in an independent fashion, that is independent from any communications network associated with the particular mobile device or independent from a GPS or other dedicated system used for location identification purposes. As such, the current location of a particular Bluetooth enabled device is determined as a function of the Bluetooth enabled devices themselves without the need for accessing the communications network associated with the particular mobile device or a GPS or another dedicated system used for location purposes.

More particularly, as a group of Bluetooth enabled devices communicate with each other over short range radio such devices also have the ability to form a small reorganizing network, a so-called piconet, as the devices move into different areas (e.g., geographic regions). The establishment of piconets is facilitated by Bluetooth being a time division protocol and having a layered software protocol stack, and it is through the so-called link management protocol (LMP) that devices join or leave a piconet. As defined by the Bluetooth Core Specification, a piconet has one device designated as the master device (a particular piconet has only one master device) and the remaining devices in the piconet are slave devices. Among other things, the master device is responsible for mediation among all the slave devices. Further, as defined by the Bluetooth Core Specification, at any given point in time a maximum of seven (7) devices can be active in a particular piconet. A particular Bluetooth device can be a part of more than one piconet as a slave device, but it can be a master device of only one piconet. Also, slaves can participate in different piconets on a time-division multiplex basis, and a master in one piconet can be a slave in another piconet.

Further, with regard to Bluetooth's piconets, it possible for a large number of slaves (e.g., more than 200) to be locked to the master device in a so-called parked state. That is, notwithstanding the piconet attribute that provides for a maximum of 7 "active" devices at any one time, slaves still have the ability to enter into a parked state which, while not active, allows such slaves to remain synchronized with a particular master device. The master device is also responsible for granting access to each device and it is the further responsibility of the master device to establish a frequency assignment and hopping scheme for each slave device as well as synchronizing with each of the slave devices. As such, a slave device synchronized with the master device calculates a clock offset as part of the LMP protocol. The clock offset is required as there is a time delay associated for the signal to travel from the master device to the slave device where such time delay is a function of the overall distance between the two devices.

As mentioned above, the principles of the present invention are directed to an enhanced technique for locating any one particular mobile device whereby the location is determined independent from any communications network associated with the particular to-be-located device or independent from any GPS or another dedicated system used for location identification purposes. That is, in accordance with an aspect of the invention, when a particular Bluetooth enabled device (e.g., a mobile telephone) wishes to obtain its current location, the device broadcasts a device discovery message. Illustratively, the device discovery message could be broadcast in such device's particular region, e.g. a so-called neighborhood defined to be a region covering a maximum of 100 meters. In accordance with the invention, only those other Bluetooth enabled devices that know their current location respond to this message. That is, in accordance with the preferred embodiment of the invention, the broadcasting device will act as the master device of the piconet and the devices that responded will act as the slaves of the piconet. Other devices in the same region simply ignore the device discovery message broadcast as they do not have accurate location information or are not Bluetooth enabled devices.

In accordance with this aspect of the invention, once there are three or more devices in the piconet, the master and the slaves are synchronized in accordance with the Bluetooth protocol. Significantly, after synchronization, the position of the master device in the network can now be determined, illustratively, as a function of clock skews. More particularly, in accordance with the preferred embodiment of the invention, the current location of the to-be-located device (i.e., the broadcasting/master device) is calculated as a function of time of arrival, whereby the time taken for a signal to reach three reference points is measured. As will be appreciated, there exist any number of known techniques for measuring the time of arrival of the signal to multiple reference points whose location is known. In accordance with the preferred embodiment of the invention, such three reference points are selected from the three or more devices which responded to the device discovery message and are now synchronized as slave devices as described above. As such, as the location of the three slave devices is known, the precise location of the to-be-located device (i.e., the broadcasting/master device) may be determined using straightforward geometry or other well-known techniques.

Thus, in accordance with the various aspects of the invention, the location of the particular mobile device in question is determined solely using, and as a function of, the particularly identified Bluetooth enabled devices. Further, such location is determined independent from any communications network utilized by, or associated with, such Bluetooth enabled devices and independent from the infrastructure of such communications network (e.g., a wireless base station) or any GPS or similar type location system.

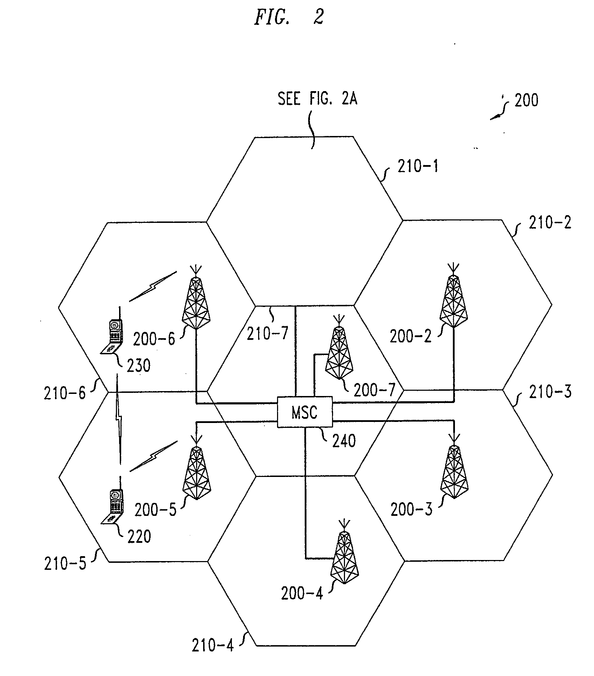

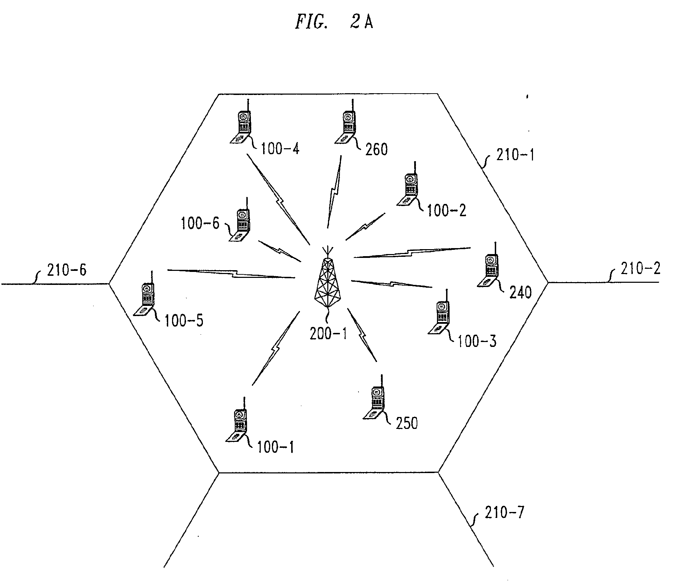

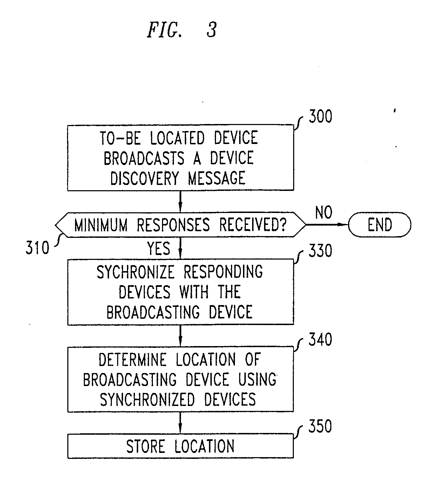

The various aspects of the present invention as described above are further detailed in the following illustrative embodiment. FIG.'s 2 and 2A show an illustrative cellular communications network arrangement suitable for implementing embodiments of the present invention incorporating the mobile telephone of FIG. 1, and FIG. 3 shows a flowchart of illustrative operations for locating a device, for example the mobile telephone of FIG. 1, in accordance with the principles of the present invention. More particularly, the wireless communications network shown in FIG. 2 provides communications services to a variety of subscribers in a geographical area 200. As shown in FIG. 2, geographical area 200 is divided into a plurality of cells 210-1 through 210-7 with each such cell having a corresponding base station 200-1 through 200-7 for enabling wireless communications amongst mobile telephones within a particular cell. Further, each of the base stations 200-1 through 200-7 is connected to a mobile switching center (MSC) 240, which manages the wireless communications network in a well-known fashion, and serves as the communications interface between the wireless communications network and other separate networks (by way of example but not limitation, a public switched telephone network (PSTN)).

As shown in FIG.'s 2 and 2A, cell 210-1 includes base station 200-1 which facilitates wireless communications amongst (a) mobile telephones 100-1 through 100-6, each of which is configured in accordance with the principles of the invention and in accordance with illustrative mobile telephone 100 (as shown in FIG. 1); and (b) mobile telephones 240, 250 and 260, each of which are configured in a conventional manner as non-Bluetooth enables devices. In accordance with the principles of the invention, any one of mobile telephones 100-1 through 100-6 may determine its precise location by implementing the various aspects of the invention. For example, turning our attention to both FIG.'s 2A and 3, suppose mobile telephone 100-4 desires to determine its current location. In accordance with an aspect of the invention, mobile telephone 100-4 (i.e., the to-be-located device) broadcasts a device discovery message (block 300).

As will be appreciated, such device discovery message can be configured in the general packet structure of a Bluetooth packet as defined in the Bluetooth Core Specification. More particularly, such general packet structure includes an access code which forms the first 68 or 72 bits (from the least significant bit) depending on the type of access code, followed by 54 bits of header and then finally up to 2745 bits of payload. In terms of the illustrative embodiment of the invention under discussion, the following types of well-known access codes are of particular interest: (1) the IAC - Inquiry Access Codes; (2) the GIAC (General IAC), a further classification of an IAC; and (3) LIAC (Limited availability Inquiry access codes), the LIAC is also sometimes referred as the DIAC (Dedicated IAC). Currently, only the GIAC is specified by the Bluetooth Core Specification. The DIAC is allocated to a specific class of devices and is implementation specific. The Bluetooth protocol, by design, envisions the DIAC to support the discovery of a limited number of devices, all supporting a particular feature, into the piconet when the master device broadcasts a device discovery message. As such, in accordance with the preferred embodiment of the invention, a specific programmable access code is defined for use by the Bluetooth enabled devices, whereby the Bluetooth enabled device can respond to such a DIAC only when such device is aware of its current location. In this way, there is an assurance that only devices that know their location accurately will be part of the piconet formed in accordance with various aspects of the invention.

Therefore, in accordance with the principles of the present invention, only those Bluetooth enabled devices that have knowledge of their current location respond to the device discover message. Illustratively, such device discover message is broadcast throughout the region defined by cell 210-1. Such prior knowledge of their current location might come for a variety of sources, including but not limited to as a prior result of employing the technique of the instant invention.

For example, consider five Bluetooth enabled mobile phones A, B, C, D and E in a wireless communications network. Suppose that mobile phone B needs to obtain its location currently, and mobile phones A and D are GPS enabled and know their current location accurately. Mobile phone E is also GPS enabled, but its GPS receiver has been turned off by the wireless network to conserve power. However, the wireless network has performed a prior network based triangulation and thus mobile phone E knows its location accurately. Mobile phone C has no knowledge of its current location. In accordance with the principles of the invention, mobile phone B broadcasts a device discovery message with a special DIAC which is received by all of the Bluetooth enabled devices A, B, C, D and E. Illustratively, the receipt as such message is accomplished through the periodic scan for so-called inquiry access codes by entering into the inquiry scan state in the state transition diagram of the Bluetooth protocol. However, in accordance with the principles of the invention, only mobile phones A, D and E will respond to the broadcasted message and become part of a piconet with mobile phone B as the master.

Once a piconet has been established, and these 4 devices synchronize with each other pursuant to the Bluetooth protocol, mobile phone B, as the master device, issues a well-known LMP message called "LMP_clkoffset_req" which is the standard defined message to obtain the clock skew of the slave device. As such, the slave devices, namely mobile phones A, D and E respond back using the "LMP_clkoffset_res" message with the right value of the clock offset compared to the master clock in mobile phone B. Thereafter, mobile phone B calculates, in a well-known manner, an estimate of the distance between each of the devices as the product of the clock offset and the speed of light, as the clock offset is the measure of time required for signals to travel from the master to the slave and these electromagnetic signals travel at the speed of light in air. With the three estimates of the distances between the three slave devices, mobile phone B can perform a trilateration and obtain its own current location. Alternatively, mobile phone B can take the pair wise difference of the clock offsets and use a so-called "time difference of arrival" method of location computation. In any of these well-known methods, it is a straightforward exercise to use the already computed clock offsets by the Bluetooth devices to perform the location computations.

Referring back to FIG. 2A and the illustrative embodiment shown therein, mobile telephones 100-1, 100-2, 100-3, 100-5 and 100-6 may each respond, as detailed above, to the device discover message. In accordance with this embodiment of the invention, a determination is made if a minimum number (i.e., three or more) of devices responded to the broadcasted device discovery message (block 310). If yes, the broadcasting device (in this illustrative example, mobile telephone 100-4) and the responding devices are synchronized (block 330) in a conventional manner in accordance with the Bluetooth protocol. That is, in accordance with the preferred embodiment of the invention, the broadcasting device, e.g., mobile telephone 100-4, will act as the master device of a piconet and the devices that respond, e.g., mobile telephones 100-1, 100-3 and 100-6, will act as the slaves of the piconet. Other devices (e.g., mobile telephone 100-5) in the same region simply ignore the device discovery message broadcast as they do not have current location information, or are not Bluetooth enabled (e.g., mobile phones 240, 250 and 260).

After synchronization, the position of mobile telephone 100-4 can now be determined (block 340), illustratively, as a function of the clock skews amongst mobile telephones 100-4, 100-1, 100-3 and 100-6. More particularly, in accordance with the preferred embodiment of the invention, the location of mobile telephone 100-4 is calculated as a function of time of arrival, whereby the time taken for a signal to reach the three reference points, i.e., the respective locations of mobile telephones 100-1, 100-3 and 100-6, from mobile telephone 100-4 is measured. As will be appreciated, there exist any number of known techniques for measuring the time of arrival of the signal to multiple reference points whose location is known.

After its location is determined, in accordance with this embodiment of the invention, such location is stored (block 350) by mobile telephone 100-4. Therefore, mobile telephone 100-4 is now in a position to respond to future device discovery messages from other devices given that it has current knowledge of its own location. Also, in accordance with a further embodiment of the invention, mobile telephone 100-4 can communicate its current position to the communications network. Such communication might prove extremely beneficial in emergency 911 applications, for example. Further, in accordance with this embodiment of the invention, once its location has been computed, the mobile telephone 100-1 (as the master device) issues a well-known "LMP_detach" message terminating the master-slave connections in the piconet. Thus, when a location is requested in the future from mobile telephone 100-1 it can compare the time stamp of when the location was computed and the current time and determine if a new location computation is required. In applications where devices do not move rapidly or there are too many location queries, reasonably stale location information can be tolerated and thus support the caching of the location of the device. However, in applications with rapid mobility and requirement of a very accurate location, the device can issue a new broadcast message, in accordance with the present invention, to obtain its latest location accurately.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. For example, in accordance with a further embodiment of the invention, a cellular communications network can have the flexibility of locating particular devices using either conventional location techniques (e.g., GPS) or such network could issue a command to a particular cellular device to obtain its own location using the above-described aspects of the invention. Advantageously, this would have the potential benefit of power conservation amongst mobile telephones in such communications network as the GPS receivers associated with such telephones may be turned off as its GPS location capabilities will not be needed.

It will also be appreciated by those skilled in the art that the block diagrams herein represent conceptual views of illustrative circuitry embodying the principles of the invention. Similarly, it will be appreciated that any flowcharts, flow diagrams, state transition diagrams, pseudocode, program code, and the like represent various processes which may be substantially represented in computer readable medium and so executed by a computer, machine, or processor, whether or not such computer, machine, or processor, is explicitly shown. Further, in the claims hereof any element expressed as a means for performing a specified function is intended to encompass any way of performing that function, including, for example, a) a combination of circuit elements which performs that function; or b) software in any form (including, therefore, firmware, object code, microcode or the like) combined with appropriate circuitry for executing that software to perform the function. The invention defined by such claims resides in the fact that the functionalities provided by the various recited means are combined and brought together in the manner which the claims call for. Applicants thus regard any means which can provide those functionalities as equivalent as those shown herein.

## Claims

1. A method for determining a location of a Bluetooth enabled mobile device, the method comprising the steps of:
broadcasting, from the Bluetooth enabled mobile device, a message to a plurality of mobile devices;
determining if a predetermined minimum number of responses to the broadcasted message are received from the plurality of mobile devices, and if so, synchronizing the Bluetooth enabled mobile device with at least three mobile devices of the plurality of mobile devices responding to the message; and
calculating the location of the Bluetooth enabled mobile device as a function of the respective locations of the synchronized at least three mobile devices.

2. The method of claim 1 further comprising the step of:
storing, in the Bluetooth enabled mobile device, the location of the Bluetooth enabled mobile device.

3. The method of claim 1 wherein each of the at least three mobile devices is Bluetooth enabled.

4. The method of claim 3 wherein the calculating the location is performed independent from any communications network associated with the Bluetooth enabled mobile device or the plurality of mobile devices, and independent from any separate location identification system.

5. The method of claim 4 wherein the Bluetooth enabled mobile device is a cellular telephone, the communications network is a cellular communications network and the separate location identification system is a GPS.

6. The method of claim 3 wherein the predetermined number of responses is three, and only those particular mobile devices of the plurality of mobile devices having current knowledge of their respective location respond to the message.

7. The method of claim 5 wherein the broadcasting the message is initiated upon receipt of an incoming message to the Bluetooth enabled mobile device.

8. The method of claim 4 wherein the calculating the location step employs a plurality of clock skews to calculate the location of the Bluetooth enabled mobile device.

9. A mobile communications apparatus, the apparatus comprising:
a Bluetooth transceiver;
a memory storing a location application, the location application having at least a plurality of program instructions; and
a processor for executing the plurality of program instructions and for controlling the operation of the mobile communications apparatus in accordance with the functions defined by the plurality of program instructions, the plurality of program instructions defining the steps of:
(i) broadcasting, through the Bluetooth transceiver, a message to a plurality of mobile communications devices;
(ii) determining if at least three responses to the broadcasted message are received, by the Bluetooth transceiver, from the plurality of mobile communications devices, and if so, synchronizing, through the Bluetooth transceiver, the mobile communications apparatus with at least three mobile communications devices of the plurality of mobile communications devices responding to the message; and
(iii) calculating the location of the mobile communications apparatus as a function of a respective location of each of the synchronized mobile communications devices.

10. The mobile communications apparatus of claim 9 wherein the calculating the location of the mobile communications apparatus is performed independent from any communications network associated with the mobile communications apparatus or the synchronized mobile communications devices, and independent from any separate location identification system.
